# EUROPEAN PATENT SPECIFICATION

(11) **EP 1 361 196 B1**
(45) Date of publication and mention of the grant of the patent: **10.03.2010**
(21) Application number: 02729516.1
(22) Date of filing: 09.01.2002
(51) Int. Cl.: C02F 1/00, B01D 35/04, B01D 35/143

(54) **WATER PURIFIER**
WASSERREINIGER
PURIFICATEUR D'EAU

(30) Priority: 15.01.2001 JP 2001006234
(43) Date of publication of application: 12.11.2003
(73) Proprietor: TORAY INDUSTRIES, INC., Tokyo 103-8666 (JP)
(72) Inventor: ISOBE, Takashi, Otsu-shi, Shiga 520-2101 (JP); ITAKURA, Junji, Gamou-gun, Shiga 521-1315 (JP); TOKUDA, Takashi, Takatsuki-shi, Osaka 569-1115 (JP)
(74) Representative: Webster, Jeremy Mark
(86) International application number: PCT/JP2002/000027
(87) International publication number: WO 2002/055439

(56) References cited:
- EP-A- 0 532 161
- WO-A-00/37363
- WO-A-00/40322
- WO-A-99/18040
- JP-A- 7 241 555
- JP-A- 11 000 656
- JP-A- 2000 033 367
- JP-U- 10 000 098
- US-A- 5 674 381
- US-A- 5 858 215

## Description

This invention relates to a water purifier provided with a filter cartridge and adapted to purify water.

Proposals for purifying liquids, in some cases water, are disclosed in: WO99/18040, US 5,858,215, US 5,674,381, WO00/40322, WO00/37363 and EP-A-0532161.

Some conventional water purifiers which are provided with a filter cartridge for purifying water are known as water purifiers in which a particular type of filter cartridge is selected and used, and replaced repeatedly. In these water purifiers, a purifier body including a holder, a flow passage selector valve and the like is designed in accordance with a specific filter cartridge, and a control program for displaying, for example, the cartridge replacement time is also determined on the basis of the specific cartridge.

In recent years, a water purifier having a high rejection of specific substances such as trihalomethane has been developed and put on the market. In this water purifier, a water purifier body is also designed in accordance with a filter cartridge having a high rejection of specific substances.

It is possible to produce filter cartridges designed for the same equipment but different in substances which are rejected by filling different filter materials in cartridges of the same size. However, when the cartridge is used for a cartridge-containing water purifier in which the cartridge is set in the water purifier body, the cartridge is not seen from the outside. Therefore, the kind of the cartridge set in the water purifier body cannot be identified. Even when the kind of the cartridge is printed on an outer surface thereof, a user who did not see the cartridge being set in the water purifier has to take the trouble to take out the cartridge from the inside of the water purifier and to confirm the kind of the cartridge.

When cartridges for the same equipment of which removal substances differ are made by filling different filter materials in cartridges of the same size, the filtering capacity of these cartridges necessarily becomes different. Therefore, even if one water purifier is capable of being provided with a plurality of cartridges of different filtering capacity, and is provided with a control program indicating the replacement time of the cartridges, it will happen that the cartridge replacement time is not properly displayed because of the method of calculating the cartridge replacement time. Consequently, the kinds of cartridges set in the water purifier and the degree of the filtering capacity thereof have to be remembered. However, it is difficult to remember the kinds, capacity and starting time of use of the cartridges for a long period of time. This readily causes inconveniences. Namely, a cartridge still having a filtering capacity remaining is unknowingly replaced, or a cartridge not having any filtering capacity remaining continues to be unknowingly used.

Accordingly, the present invention provides a water purifier (1) having a filter cartridge (3) provided with a filter and a water purifier body (2) to which the filter cartridge is loaded, which water purifier (1) is selectively operable to discharge raw water or water purified by the filter cartridge (3) and has a water flow rate detecting member (102) for detecting flow of purified water from the filter cartridge (3), wherein the water purifier (1) is capable of being loaded with a plurality of kinds of filter cartridges and is provided with an indicator (105) adapted to indicate the kind of the filter cartridge in use in the water purifier (1) and wherein means are provided to turn off the indicator (105) when the flow rate detecting member (102) detects that flow of purified water from the filter cartridge (3) has stopped.

Embodiments of the present invention are further directed to such a water purifier preferably provided with a power source for use in displaying the kind of filter cartridge in use, a display for showing the replacement time of the power source, and/or a display for showing the replacement time of the filter cartridge.

### Brief Description of the Drawings:

Fig. 1 is a front view of a water purifier showing a mode of embodiment of the present invention;
Fig. 2 is a top view of the water purifier shown in Fig. 1;
Fig. 3 is a right side view of the water purifier shown in Fig. 1;
Fig. 4 is a longitudinal sectional view of the water purifier shown in Fig. 2 and taken along the line A-A in the same drawing;
Fig. 5 is a longitudinal sectional view of the water purifier shown in Fig. 2 and taken along the line B-B in the same drawing;
Fig. 6 is a horizontal sectional view of the water purifier shown in Fig. 1;
Fig. 7 is a horizontal sectional view of a filter cartridge;
Fig. 8 is a sectional view of the joint portions of a lever and a driving shaft of the water purifier shown in Fig. 5, which is taken along the arrow-carrying line C-C in the same drawing;
Fig. 9 is a sectional view of the water purifier shown in Fig. 6, which is taken along the arrow-carrying line D-D in the same drawing;
Fig. 10 is a sectional view of the water purifier shown in Fig. 4, which is taken along the arrow-carrying line E-E in the same drawing;
Fig. 11 is an exploded view in perspective of a power source member;
Fig. 12 is an exploded view in perspective of a flow rate measuring member;
Fig. 13 is a sectional view of a water wheel and a water wheel support member in Fig. 12;
Fig. 14 is a sectional view of a magnetic switch and a magnetic switch holder in Fig. 12;
Fig. 15 is a longitudinal sectional view of a filter cartridge distinguishing member;
Fig. 16 is a sectional view of a control member in the water purifier shown in Fig. 6, which is taken along the arrow-carrying line F-F in the same drawing;
Fig. 17 is a schematic diagram of a liquid crystal display; and
Fig. 18 is a flow chart showing an example of the controlling of the water purifier according to the present invention.

### Description of the Reference Numerals:

- 1: water purifier
- 2: water purifier body
- 3: filter cartridge
- 4: faucet
- 5: lever
- 11a: ball
- 11b: ball
- 11c: ball
- 12: valve shaft
- 13: selector valve body
- 14: raw water spray port
- 15: raw water stream port
- 16: lower body
- 17: upper body
- 18: valve operating member
- 19: purified water outflow port
- 21a: water passage
- 21b: water passage
- 21c: water passage
- 22: partition plate
- 23: upper chamber
- 24: lower chamber
- 25a: O-ring
- 25b: O-ring
- 25c: O-ring
- 26: raw water supply port
- 27a: cam portion
- 27b: cam portion
- 27c: cam portion
- 28: raw water inflow port
- 29: purified water receiving port
- 30: .purified water passage
- 31a: flow passage
- 31b: flow passage
- 31c: flow passage
- 36: packing
- 37: adapter
- 38: fixing nut
- 39: water flow moderating member
- 41: driving shaft
- 43: operation stopper
- 44: torsion coil spring
- 45: spur gear
- 46: spur gear
- 47: ratchet pawl member
- 48: ratchet teeth
- 51: indication ring
- 61: case
- 61a: cylindrical projection
- 62: raw water receiving port
- 63: purified water supply port
- 64: cylindrical member
- 65: O-ring
- 66: filter
- 67: filter
- 68: hollow fiber bundle
- 69: curable resin
- 70: adsorbent layer
- 71: transparent cap
- 72: projection
- 73: O-ring
- 74: O-ring
- 81: opening
- 82: transparent member
- 91: cartridge cap
- 92: openable cap
- 93: opening
- 101: power source member
- 102: flow rate detecting member
- 103: filter cartridge distinguishing member
- 104: control member
- 105: liquid crystal display
- 111: battery
- 112: battery cover
- 113: anode metal member
- 114: cathode metal member
- 115: battery holder
- 116: battery mount
- 117: O-ring
- 118: cutout
- 119: recess
- 120: rubber cap
- 121: magnet
- 122: water wheel
- 123: water wheel support member
- 124: magnetic switch
- 125: magnetic switch holder
- 126: shaft
- 131: shaft member
- 132: blade
- 133: blade
- 134: rotary shaft bore
- 135: magnet-setting bore
- 136: curable resin
- 137: curable resin
- 141: distinguishing base plate
- 142: conductive member
- 143: rubber switch
- 144: housing for the distinguishing member
- 145: switch-operating hole
- 151: circuit board
- 152: circuit board holder
- 153: frame for circuit board
- 154: reset button
- 155: curable resin
- 156: switch rubber
- 161: filter cartridge replacement indication element
- 162: battery replacement indication element
- 163: kind of cartridge indication element
- 164: block A
- 165: block B
- 166: block C
- 167: frame
- 201: insertion of battery
- 202: initialization
- 203: energizing of LCD
- 204: pushing reset button
- 205: resetting of cumulatively counted number
- 206: energizing of LCD
- 207: inserting of cartridge
- 208: .distinguishing of the kind of cartridge in use from another
- 209: energizing of LCD
- 210: setting of block turn off count
- 211: energizing of LCD
- 212: setting of block turn off count
- 213: establishing of conditions for sleeping mode
- 214: deenergizing of LCD
- 215: processing of sleeping mode operation
- 216: sleeping condition
- 217: inputting of flow rate detecting pulse signal
- 218: canceling of sleeping condition
- 219: adding of cumulative count number
- 220: adding of cumulatively calculated water supply time
- 221: comparing of cumulative count number with set value
- 222: energizing of LCD
- 223: comparing of cumulatively calculated water supply time with set.value
- 224: energizing of LCD
- 225: establishing of conditions for sleeping mode
- 226: deenergizing of LCD

### Best Mode for Carrying Out the Invention:

A preferable mode of embodiment of the present invention will now be described with reference to the drawings by taking as an example a water purifier fixed to a faucet in a household kitchen.

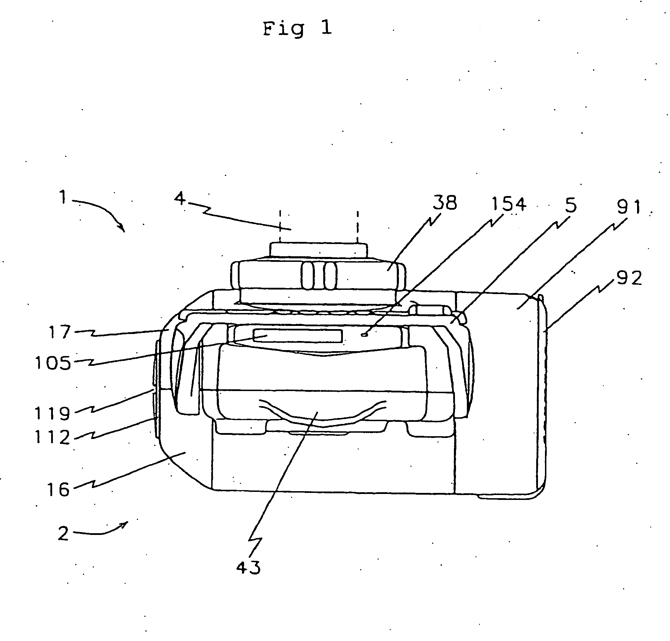

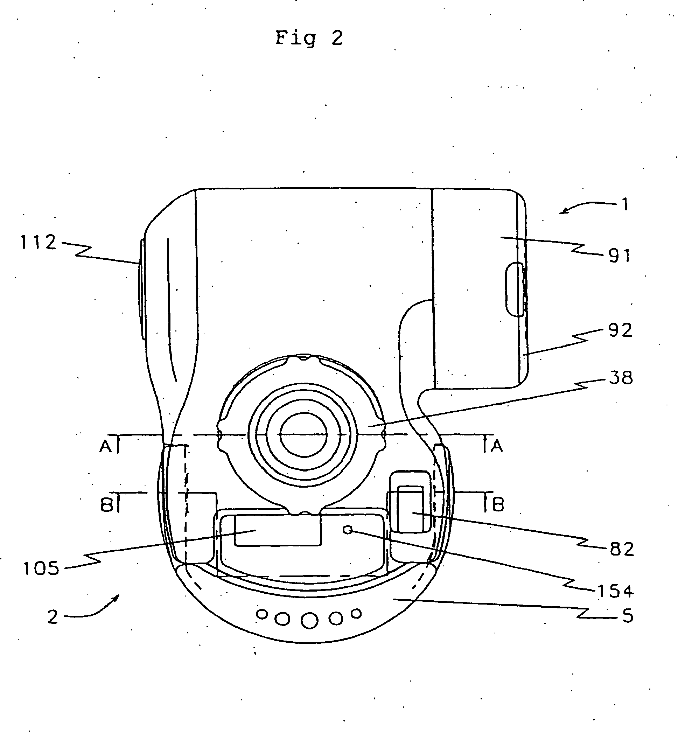

An example water purifier according to the present invention includes, as shown in Fig. 1 to Fig. 6, a water purifier body 2 containing a selector valve in the interior thereof, and a filter cartridge 3 holding filter materials therein, and some other parts. The water purifier body 2 is provided with a lever 5. The raw water flowing from a faucet 4 into the water purifier body through a raw water inflow port is subjected to a selective switching operation by operating this lever 5 to a mode of discharging this raw water as it is as a spray (raw water spray), a mode of discharging the raw water as it is as a stream of water (raw water stream), and a mode of supplying the raw water into the filter cartridge 3. The raw water supplied to the filter cartridge 3 is filtered through an adsorbent, such as activated carbon or through hollow fibers and the like, and discharged as purified water from a purified water discharge port.

First, the water purifier body 2 will be described.

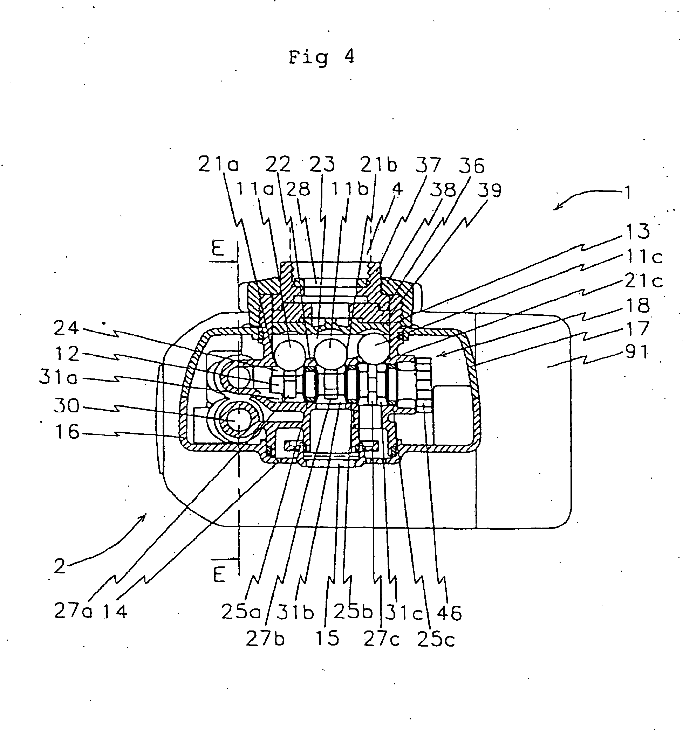

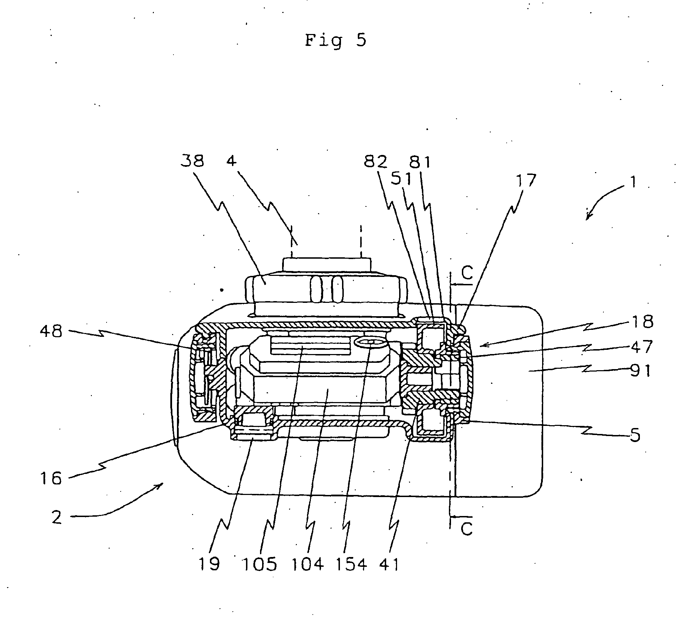

As shown in Fig. 4 and Fig. 5, the water purifier body 2 is composed of a selector valve body 13 provided with three balls 11a, 11b, 11c, and a valve shaft 12; a lower body 16 provided with a raw water spray port 14, a raw water stream port 15 and a purified water outflow port 19; an upper body 17 provided with an opening from which the selector valve body 13 projects toward the upper surface of the water purifier body; a valve operating member 18 adapted to carry out a valve switching operation; a cartridge cap 91 to which the filter cartridge 3 is fixed; and an electrically equipped member adapted to integrate a flow rate and display the results.

A ring-shaped packing 36 is fitted in the selector valve body 13, and fixing nut 38 is screwed on the selector valve body 13 via an adapter 37 screwed on a male threaded portion of the faucet 4, the water purifier body 2 thus being fixed to the faucet 4.

The interior of the selector valve body 13 is partitioned into an upper chamber 23 and a lower chamber 24 by a partition plate 22 providing three water passages 21a, 21b, 21c.

In the upper chamber 23, the three balls 11a, 11b, 11c are provided so as to be opposed to the three water passages 21a, 21b, 21c. When the ball 11a is fitted in the water passage 21a with the water passage 21a closed therewith, a lower portion of the ball 11a projects into the lower chamber 24. The same applies to the balls 11b, 11c.

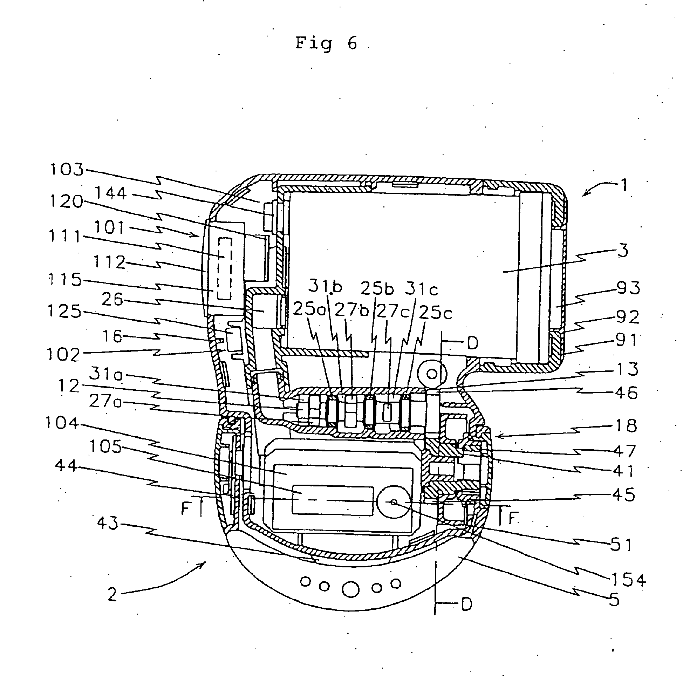

In the cylindrical lower chamber 24, a valve shaft 12 is rotatably inserted, and O-rings 25a, 25b, 25c mounted on predetermined portions of the valve shaft 12 are watertightly engaged with an inner surface of the lower chamber 24. Consequently, the lower chamber 24 is partitioned into three parts to form a flow passage 31a extending from the water passage 21a to a raw water supply port 26 (refer to Fig. 6) for supplying raw water to the filter cartridge 3, a flow passage 31b extending from the water passage 21b to the raw water stream port 15, and a flow passage 31c extending from the water passage 21c to the raw water spray port 14.

As shown in Fig. 4, the valve shaft 12 is provided with cam portions 27a, 27b, 27c in a position which is opposed to the water passages 21a, 21b, 21c. These cam portions are provided so as to be staggered from one another by, for example, 60° in the circumferential direction of the valve shaft 12. When the valve shaft 12 is turned 60° each time, the cam portions selectively face in the upward direction to enable the cam portions to raise the lower portions of the balls projecting into the lower chamber 24, and thereby open the water passages. Namely, when the valve shaft 12 is turned at a predetermined angle by a valve operating member 18 which will be described later, one of the water passages 21a, 21b, 21c is opened, and the mode of sending the raw water flowing from the faucet 4 can be switched selectively to a mode of discharging the raw water as it is as a spray, or a mode of discharging the raw water as it is as a stream of water, or a mode of supplying the raw water to the filter cartridge 3.

Metal balls as cores covered with rubber are used as the balls 11a, 11b, 11c. The shape of the valve body is not limited to a spherical shape. The valve body may also have a conical shape, a cylindrical shape and an umbrella-like shape. In order to improve the sealability of the balls 11a, 11b, 11c in a water passage-closing state which is provided in the upper chamber 23, the balls may be urged by springs and the like from the upper side thereof toward the water passages.

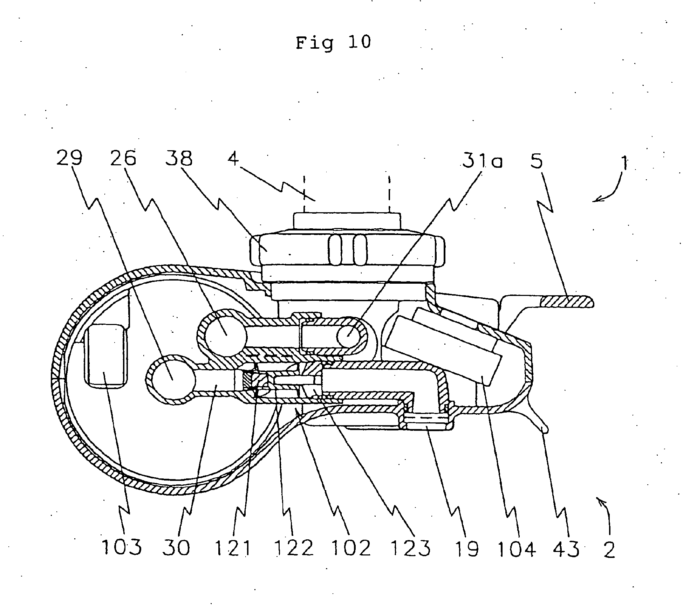

As shown in Fig. 6 and Fig. 10, a raw water supply port 26 for supplying raw water to the filter cartridge 3 and a purified water receiving port 29 for receiving purified water from the filter cartridge 3 are provided at the rear side of a side portion of the selector valve body 13. The raw water supply port 26 communicates with a flow passage 31a, while the purified water receiving port 29 communicates with a purified water discharge port 19 via a purified water passage 30. The purified water passage 30 is provided therein with a water wheel 122 of a flow rate detecting member 102, which will be described later, and a water wheel support member 123 so that the water wheel 122 is rotated by the purified water conveyed thereto.

The filter cartridge 3 will now be briefly described.

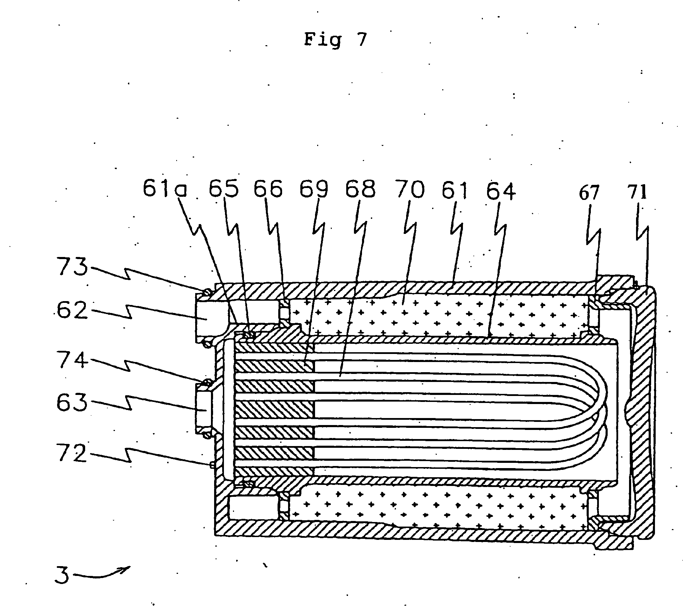

As shown in the horizontal sectional view of Fig. 7, the filter cartridge 3 is provided in a bottom portion of a case 61 thereof with a raw water receiving port 62 for receiving raw water from the raw water supply port 26, and a purified water supply port 63 for supplying purified water to the purified water receiving port 29. The raw water receiving port 62 and purified water supply port 63 are provided with O-rings 73, 74 respectively so as to prevent water from leaking to the outside when these ports 62, 63 are joined to the raw water supply port 26 and purified water receiving port 29, respectively.

A cylindrical projection 61a is formed on an inner bottom surface of the case 61, and a cylindrical member 64 of a hollow fiber module is fitted at a lower end portion thereof in the cylindrical projection 61a via an O-ring 65 and thereby stood up. Ring-shaped filters 66, 67 are fixed to upper and lower portions of an outer circumference of this cylindrical member 64 so as to retain an adsorbent layer 70, which processes the raw water passing through a space between an outer circumferential surface of the cylindrical member 64 and an inner surface of the case 61.

The cylindrical member 64 houses therein bundles 68 of a plurality of hollow fibers formed by binding a plurality of sets of hollow fibers into bundles, and bending the resultant bundles to an inverted-U shape. Both end portions of the hollow fibers are seal-fixed (bonded) with a curable resin 69 (sealant) packed in the portions of a space in a lower portion of the cylindrical member 64 which portions are among the hollow fibers and between the hollow fibers and the cylindrical member 64. A part of a bonded portion of each of the hollow fibers is removed by cutting off before the hollow fibers are inserted into the case member 61, and, therefore, a lower end of each hollow fiber is opened toward the purified water supply port 63.

Between an outer circumferential surface of the cylindrical member 64 and an inner surface of the case 61, an adsorbent layer 70 made of activated carbon, zeolite, an ion exchange resin, a chelate resin or the like is provided.

An upper portion of the case 61 is opened so that the hollow fiber bundles 68 and adsorbent can be packed therein easily, and a transparent cap 71 is fitted in this portion of the case so that a soiled part of an inner portion of the case can be ascertained, and ultrasonically fused thereto.

The filter cartridge 3 formed as described above is set in the water purifier body 2 as shown in Fig. 6, and a cartridge cap 91 is fixed by a screw tightening method to the portions of the lower body 16 and upper body 17 at which the cartridge cap 91 covers the filter cartridge 3. Thus, the cartridge cap 91 fulfils the function of fixing the filter cartridge 3 in a predetermined position. The cartridge cap 91 is provided with an openable cap 92. When this cap 92 is opened, the soiled condition of the hollow fibers can be ascertained through an opening 93 of the cartridge cap and the transparent cap 71 of a filtration member.

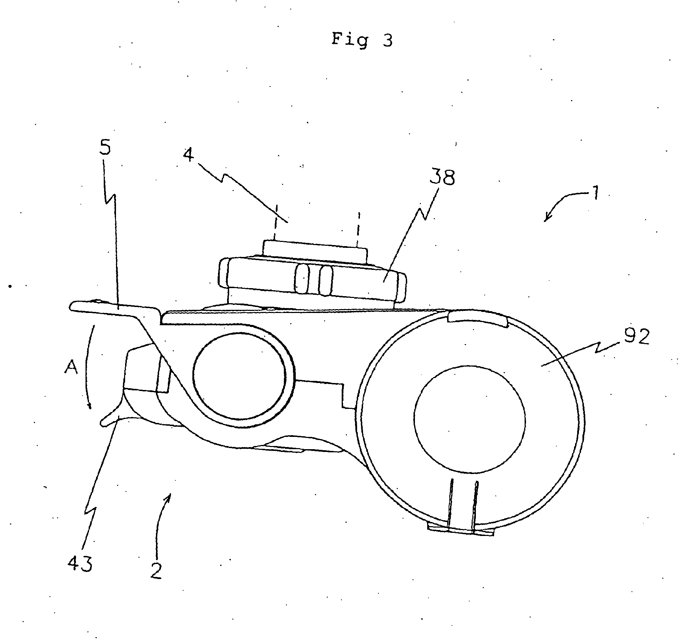

A valve operating member 18 for turning the valve shaft 12 will now be described by using Fig. 3 and Fig. 6.

As shown in Fig. 6, the valve operating member 18 is supported on the lever 5 and selector valve body 13, and includes a driving shaft 41, which is turned around the same axis as the lever 5, and a torsion coil spring 44 fixed at one end thereof to the lower body 16, and at the other end thereof to the lever 5. When the lever 5 is pressed down in the direction of an arrow A as shown in Fig. 3, the lever is turned counter-clockwise (when Fig. 6 is viewed from a right side) until the lever 5 engages an operation stopper 43. When the operation is stopped with the finger removed from the lever 5, which is in engagement with the operation stopper 43, the lever is turned clockwise owing to the torsion coil spring 44 to return to its initial position.

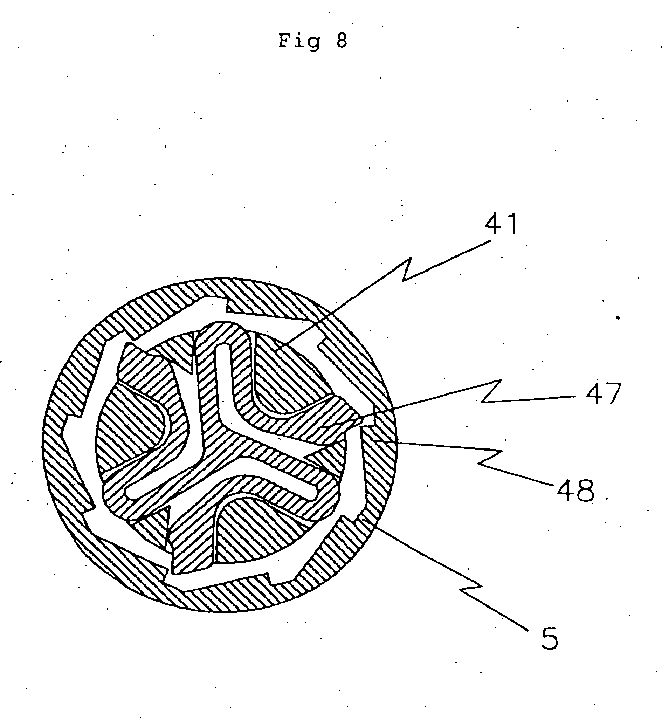

Fig. 8 is a schematic sectional view taken along the arrow-carrying line C-C in Fig. 5, and showing joint portions of the lever 5 and driving shaft 41. As shown in Fig. 8, ratchet pawl members 47 fitted into one end portion of the driving shaft 41 are engaged with ratchet teeth 48 of the lever 5 to form a ratchet mechanism. When the lever 5 is turned counter-clockwise (with respect to Fig. 6 viewed from a right side) from its initial position, the driving shaft 41 is turned with the lever 5 in a combined state at 40° counter-clockwise. When the lever 5 is turned clockwise to return to its initial position, the driving shaft 41 is not turned.

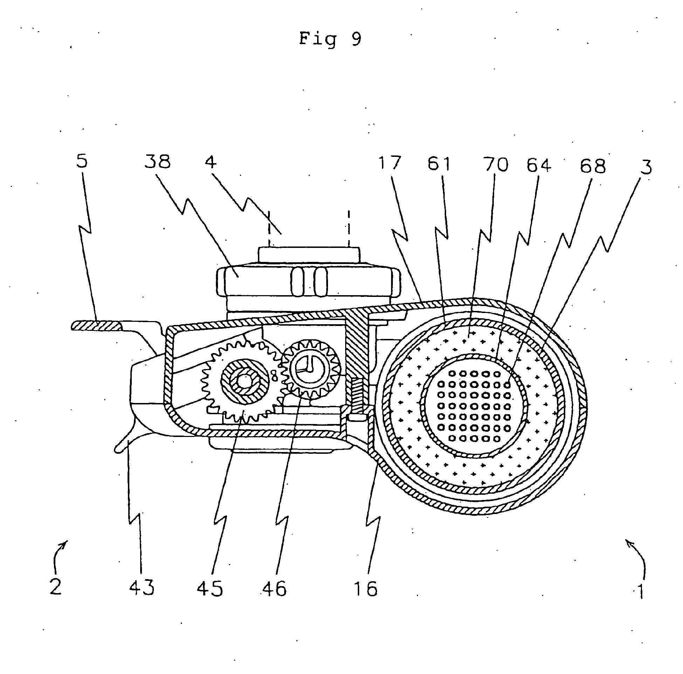

As shown in Fig. 6 and Fig. 9 which is a schematic sectional view taken along the arrow-carrying line D-D in Fig. 6, the driving shaft 41 is mounted with a spur gear 45 meshed with a spur gear 46 mounted on the valve shaft 12. A gear ratio of the spur gears 45 and 46 is 3:2, so that, when the spur gear 45 is turned 40°, the spur gear 46 is turned 60°. Namely, when the lever 5 is operated once, the driving shaft 41 is turned 40°, and the valve shaft 12 60°. Even when the spur gears are replaced with helical gears, double helical gears, etc., difficulties do not occur at all. Although the gear ratio is set to 3:2, the gear ratio is not limited thereto; it may be set to 2:1 or 3:1. When the number of teeth of the spur gear 45 is set greater than that of the spur gear 46, an angle of arc in which the valve shaft 12 is turned becomes larger than that of an arc in which the driving shaft 41 is turned. Namely, even when an operating angle of the lever 5 is set small, an angle of arc in which the valve shaft 12 is turned can be increased sufficiently. As described above, when gears are used, a lever operating angle can be set by selectively setting a gear ratio, and, moreover, the switching of the flow passages can be done reliably and accurately.

As shown in Fig. 5, an indication ring 51 on which sets of letters indicating the switched condition, i.e. "Purified Water", "Stream" and "Spray", are printed on three portions thereof spaced at 40° intervals is fixed to the driving shaft 41. One of the sets of letters, "Purified Water", "Stream" and "Spray", printed on the indication ring 51 is rendered capable of being seen from an opening 81 of an upper body 17, so that the switched condition can be ascertained easily. The indications representing the switched condition may include letters only or illustrations only or combinations thereof. A transparent member 82 provided over the opening 81 prevents the water from entering the interior of the water.purifier body 2 while tableware is washed and in some other cases, and the indication ring 51 from being soiled.

An electrically equipped member (electronic circuit) for displaying the results of cumulative calculation of a flow rate of water will now be described.

As shown in Fig. 6 and Fig. 10, the electrically equipped member includes a power source member 101, a flow rate detecting member 102, a filter cartridge distinguishing member 103, a control member 104, a liquid crystal display member 105, etc.

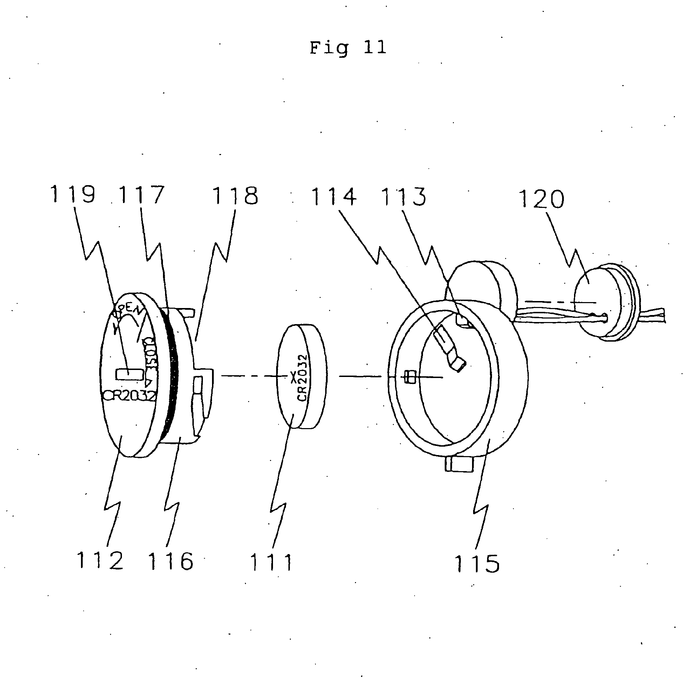

As shown in an exploded perspective view in Fig. 11, the power source member 101 includes mainly a battery holder 115 provided in the water purifier body 2, a coin type manganese dioxide - lithium battery 111 (which will hereinafter be referred to as a battery 111), an anode metal member 113 and cathode metal member 114, and a detachable battery cover 112 to which the battery is fixed while being kept out of water, etc.

The battery cover 112 has a cylindrical battery mount 116, and an O-ring 117 on an outer circumference of the mount. Thus, when the battery cover 112 is fixed to the battery holder 115 by a bayonet mechanism, the entry of water into the battery mount 116 is prevented. Since the cylindrical battery mount 116 is provided with a cutout 118, the battery can be removed from the mount easily by a finger engaging the cutout. The battery cover 112 is provided on an outer surface thereof with a recess 119 in which a coin is inserted and turned. Around this recess, letters or illustrations for showing the specifications of the battery and the directions in which the battery cover 112 is to be turned for opening or closing are marked. This enables a user to ascertain the specifications of the battery and the directions in which the battery cover 112 is to be turned, remove the battery cover 112 from the battery holder 115, and thereby replace the battery.

The anode metal member 113 and cathode metal member 114 provided in the battery holder 115 are connected to the control member 104 shown in Fig. 6, via respective lead wires, and supply the control member 104 with electric power from the battery 111. The lead wires are fixed to the battery holder 115 via a rubber cap 120, which prevents the water from flowing via the lead wires to the anode metal member 113 and cathode metal member 114 and further entering the interior of the battery mount 116.

The battery may be either a primary battery or a secondary battery. The battery may also be an alkali dry battery, a manganese dry battery, a silver oxide battery, an air zinc battery and the like besides a lithium battery, such as a manganese dioxide lithium battery capable of supplying electric power at a comparatively high voltage stably for a long period of time. The battery is preferably a small-sized battery, such as a button type battery, a coin type battery, etc. which is lightweight and does not need a large space for the installation thereof. A small-sized battery does not cause the dimensions of the water purifier body to increase remarkably, nor does it cause the weight of the water purifier body to increase. Moreover, such a battery does not cause an increase in the manufacturing cost of the water purifier.

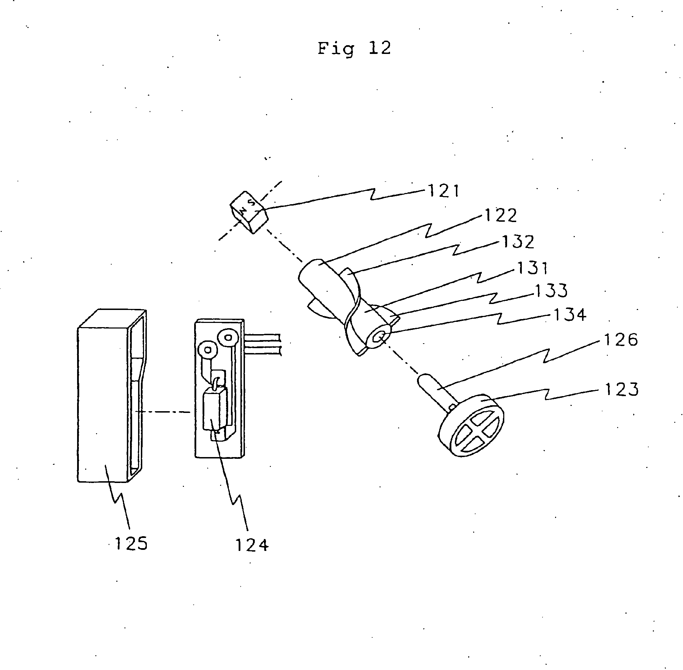

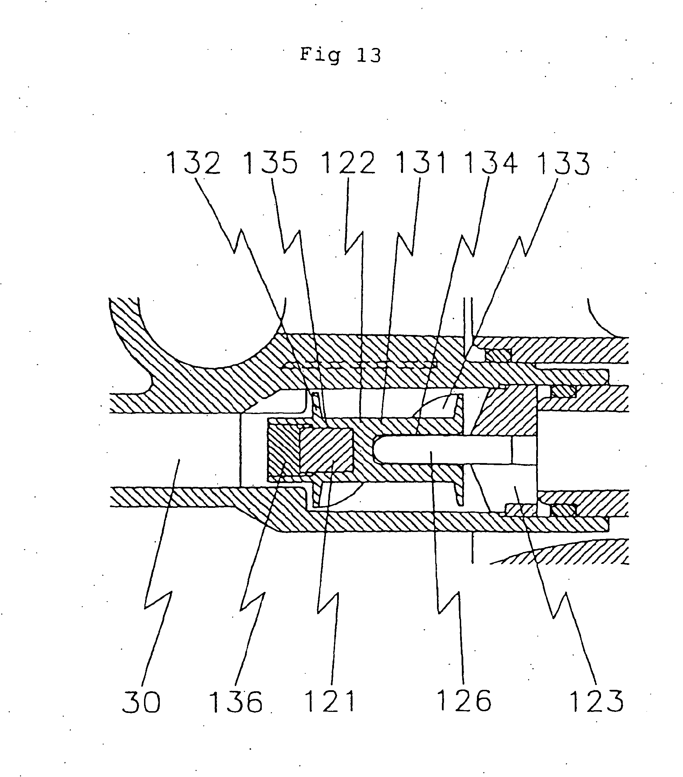

As shown in Fig. 10 and Fig. 12 to Fig. 14, the flow rate detecting member 102 includes mainly a water wheel 122 containing a magnet 121 therein, a water wheel support member 123 rotatably supporting the water wheel 122, a magnetic switch 124 adapted to be opened and closed in accordance with a rotation of the magnet, and a magnetic switch holder 125 on and to which the magnetic switch 124 is supported and fixed.

The water wheel 122 is formed with two blades 132, 133 on a columnar shaft member 131. The shaft member 131 is provided in one end portion thereof with a rotary shaft bore 134 into which a shaft 126 of the water wheel shaft member 123 is inserted, and in the other end portion thereof with a magnet setting bore 135 in which the magnet 121 is buried.

As shown in Fig. 10, the water wheel 122 is supported via a shaft from the downstream side thereof on the water wheel-support member 123 so that the water wheel 122 can be rotated in the purified water passage 30, so that the water wheel does not separate due to water flow. The rotary shaft of the water wheel 122 is an axial shaft parallel to the purified water flow direction, and can be housed in the purified water passage 30 without increasing a cross-sectional area of the same passage 30. Namely, space in the water purifier can be saved as compared with that of a water purifier in which a rotary shaft of an impeller extends at right angles to the purified water flow direction. Although two blades are provided on the impeller in this mode of the embodiment, one blade or three or more blades may also be provided. Although this water wheel is provided in the portion of the purified water passage 30, which is on the downstream side of the filter cartridge 3, the water wheel may, instead, also be provided on the upstream side of the filter cartridge 3. In this case, it is desirable that the water wheel 122 be provided with a pre-filter in the portion thereof which is on the upstream side of the water wheel 122 so as to prevent dirt, etc. from being caught by the water wheel 122.

The magnet 121 is inserted in the magnet setting bore 135 so that a straight line connecting a N-pole and an S-pole thereof together and an axis of rotation of the water wheel 122 extend at right angles to each other. In order to prevent the magnet from slipping out, and from contacting the water and being thereby rusted, a plug member is put in an opening of the magnet-setting bore 135 and bonded or welded thereto. When the plug member and the shaft member 131 of the water wheel 122 are fused together with ultrasonic waves or heat and the like, prevention of the slipping out and rusting of the magnet 121 can be attained easily and reliably. In order to prevent the magnet 121 from coming out and being rusted, it is also preferable that the opening of the magnet setting bore 135 be sealed with a curable resin 136 (sealant) after the magnet 121 is inserted in the magnet setting bore 135. The curable resin is preferably a polyurethane resin of a higher safety than an epoxy resin, other sealant and bonding agent that may also be used. In order to prevent the magnet 121 from being rusted, it is also preferable that a coating material be applied thereto. A ferrite magnet and the like as well as a rare earth metal magnet having a high magnetic force may be used as the magnet 121.

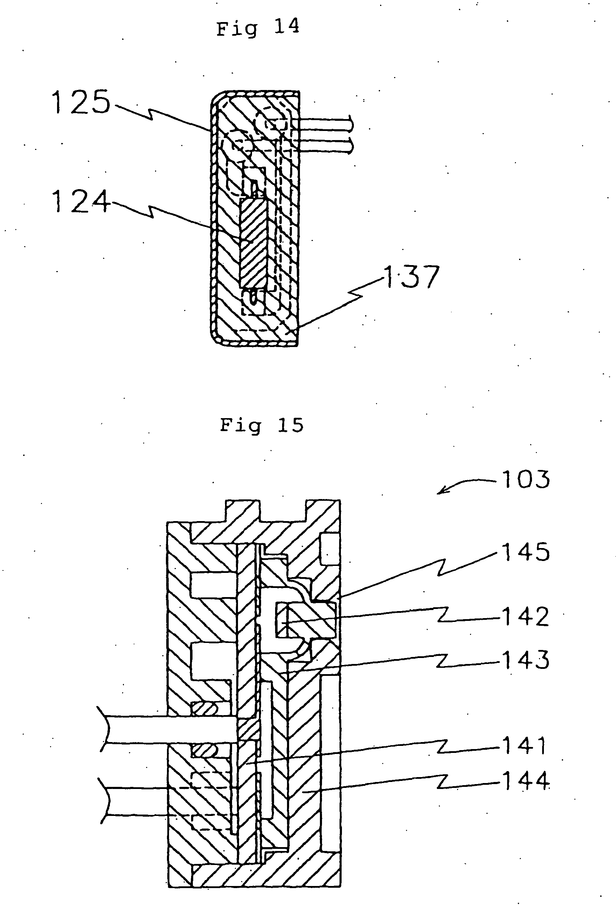

As shown in Fig. 14, the magnetic switch 124 is inserted in the magnetic switch holder 125, and sealed fixedly with a curable resin 137 (sealant). Two terminals of the magnetic switch 124 are connected to the control member 104 shown in Fig. 10, via lead wires, and a pulse signal generated in accordance with the opening and closing of the magnetic switch 124 is transmitted to the control member 104. The magnetic switch holder 125 in which the magnetic switch 124 is housed contacts an outer circumference of the purified water passage 30, and is fixed in the vicinity of the water wheel 122 as shown in Fig. 6.

In the flow rate detecting member 102 thus formed, the water wheel 122 is rotated owing to flow of the purified water to cause the magnet 121 buried in the water wheel 122 to rotate, a magnetic field being varied in accordance with the rotation of the magnet. A rotation of the magnet 121 causes the magnetic switch 124 to be opened and closed twice. As a result, pulse signals for two cycles are generated and transmitted to the control member 104.

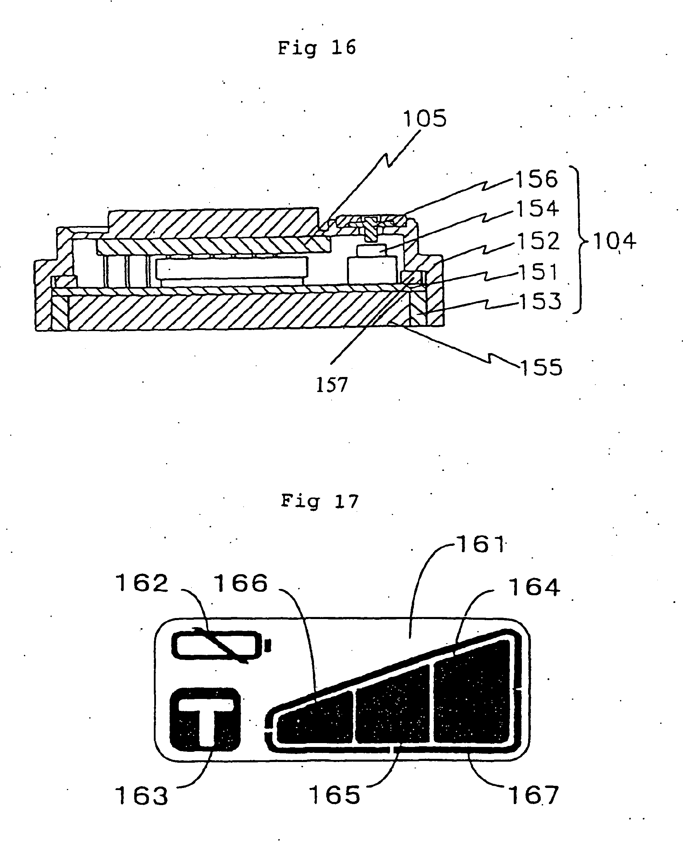

The control member 104 and liquid crystal display 105 will now be described by using Fig. 6 and Fig. 16.

The control member 104 includes mainly a circuit board 151 provided with a CPU, a transparent circuit board holder 152 housing the circuit board 151 therein, and a circuit board frame 153 for supporting fixedly the circuit board 151 in the circuit board holder 152. The CPU is adapted to receive the supply of electric power from the power source member 101, make a computation on the basis of the pulse signal from the flow rate detecting member 102 and a signal from the filter cartridge distinguishing member 103, and send an output signal to the liquid crystal display 105.

The circuit board 151 is provided with an operating member for resetting the content of what is displayed to an initial state. The operating member is composed so that the operating member can be worked directly from an outer surface of the water purifier, and so that the data on a cumulative flow rate and some other data can be simply reset. Namely, a reset button 154 for resetting the content of what is displayed to an initial state by pressing the button is provided on the circuit board 151 so that the reset button projects toward an outer surface of the water purifier. In order to prevent the water from entering the inner side of the circuit board 151, a surface of the reset button 154 is covered with switch rubber 156. Since the user can press the reset button 154 directly from the outer surface of the water purifier via the switch rubber 156, the content of what is displayed can be easily reset to the initial state. Accordingly, when the user replaces the filter cartridge with a new filter cartridge by being urged by a filter cartridge replacement indication element 161, and presses the reset button 154, a cumulatively counted number returns to zero, and the filter cartridge replacement indication element 161 also returns to an initial display condition.

Thus, the water purifier according to the present invention is preferably provided with the operating member for resetting the content of what is indicated by the indicator member to an initial indicator condition, so as to intentionally reset what is indicated, and so as not to have what is indicated automatically reset. Therefore, a problem encountered in a related art water purifier, in which a detecting mechanism using a limit switch and a magnetic flux detecting element and the like is provided in a water purifier body, does not occur. Namely, a problem encountered in such a related art water purifier, in which a cumulative flow rate of the used water is automatically reset when a filter cartridge is taken out from the water purifier so as to ascertain the kind of the filter cartridge in use, so that the filter cartridge replacement time is not suitably displayed, does not occur in the water purifier according to the present invention. The present invention preferably relates to a directly-faucet-connected type water purifier, in which it is conceivable that the operating member is exposed to water, and that the user moves the operating member by a hand wetted with water. However, since the operating member is water-proofed by covering the reset button 154 with the switch rubber 156, entry of the water into the operating member can be reliably prevented, and an erroneous operation of the circuit board 151, which is ascribed to the entry of water into the inner side thereof, does not occur.

The reset button 154 may be composed so that the reset button can switch what is shown on the display to an initial state corresponding to the kind of the installed filter cartridge. This enables users to set selectively the values for the kind and lifetime corresponding to the installed filter cartridge by, for example, pushing the reset button 154 for three or more seconds continuously in repetition, and results in a suitable display.

As shown in Figs. 1, 2, 5, 6 and 16, the liquid crystal display 105 is supported fixedly and directly on and united in one body with the circuit board 151, and positioned in a front upper portion of the water purifier body 2 so that the user can see the display easily while he uses the water purifier. This liquid crystal display 105 is a preferable example of the indicator in the present invention. Though this liquid crystal display 105 can be provided in a position away from the circuit board, and connected thereto via lead wires and the like, a signal can be transmitted more reliably when this liquid crystal display is supported fixedly and directly on the circuit board 151. In order to prevent the circuit board 151 from being operated erroneously due to water entering the inner side thereof from the outside, it is preferable that the circuit board holder 152 be waterproofed by inserting the circuit board 151 and liquid crystal display 105 into the circuit board holder from the opening of the circuit board holder, fixing the resultant parts therein by the circuit board frame 153, and sealing the opening with a curable resin 155 (sealant). Owing to the execution of such a waterproofing process, each of the parts needs not be subjected to a waterproofing process respectively, so that simplification of the water purifier manufacturing steps and reduction of the manufacturing cost become possible because there is no need to waterproof each part.

Since the curable resin 155 has a fluidity before the execution of a curing step therefor, a space around the lead wires connecting the control member 104 and power source member 101, etc. together can be closely filled with the resin, and the entry of water into the inner side of the circuit board 151 along the lead wires can be easily and reliably prevented. A two-liquid-mixed type polyurethane resin having a high water resistance or an epoxy resin or the like is preferably used as the curable resin 155. It is also preferable to prevent the curable resin 155 having a fluidity from flowing toward the liquid crystal display 105 during the execution of the waterproofing process, and the liquid crystal display from thereby becoming difficult to be seen, by providing a packing 157 between the portions of the circuit board 151 and circuit board holder 152 which correspond to a circumferential section of the circuit board 151.

As shown in Fig. 17, the liquid crystal display 105 is provided with a filter cartridge replacement indication element 161 consisting of a frame 167 and three blocks A, B, C arranged therein, a battery replacement indication element 162, and kind-of-cartridge indication element 163. When these elements are turned on, turned off and flashed, the lifetime of the filter cartridge, the lifetime of the battery and the kind of the filter cartridge are displayed. These filter cartridge replacement indication element 161, battery replacement indication element 162 and kind-of-cartridge indication element 163 may be provided independently but, when these elements are provided collectively in one liquid crystal display as in this mode of embodiment, the saving of space can be effected. Moreover, the collective provision of these elements enables the user to read a plurality of pieces of information at a glance, and is therefore preferable.

The filter cartridge distinguishing member 103 shown in Fig. 10 will now be described by using the schematic longitudinal sectional view of Fig. 15.

The filter cartridge distinguishing member 103 includes mainly a rubber switch 143 to which a conductive member 142 is closely attached, a distinguishing base plate 141 having two contacts with respect to the conductive member 142, and a distinguishing member housing 144 in which these parts are housed.

The two contacts of the distinguishing base plate 141 are connected to the control member 104 via lead wires, and the opening and closing of the two contacts are transmitted to the control member 104.

The rubber switch 143 is provided in the distinguishing member housing 144 so as to be superposed on the distinguishing base plate 141. When the rubber switch 143 is pressed by the projection 72, which is provided on the bottom portion of the filter cartridge 3, through a switch operating hole 145, the conductive member 142 engages the two contacts of the distinguishing base plate 141 to cause the circuit to be closed, so that an electric current flows in the circuit. When the filter cartridge is removed to cause the projection 72 to leave the rubber switch 143, the rubber switch 143 returns to its initial state owing to the elasticity thereof, so that the contacts are opened. When the projection is not provided on the bottom portion of a filter cartridge, the contacts are left opened. Namely, owing to a signal representative of the opening and closing of the contacts, a filter cartridge provided with a projection on a bottom portion thereof and a filter cartridge not provided with a projection on a bottom portion thereof can be distinguished from each other. The rubber switch 143 also fulfils the function of preventing the water from flowing from the switch-operating hole 145 to the side of the distinguishing base plate 141.

A mechanism for distinguishing a filter cartridge provided with a recess instead of a projection in a bottom portion thereof and a filter cartridge not provided with a recess in a bottom portion thereof may also be employed. A plurality of switch operating holes, rubber switches, and distinguishing base plates may be provided so that three or more kinds of filter cartridges can be distinguished from one another. Instead of a combination of the projection and rubber switch, a combination of a bar code and a bar code reader, and a combination of a magnet and a magnetic switch may further be used.

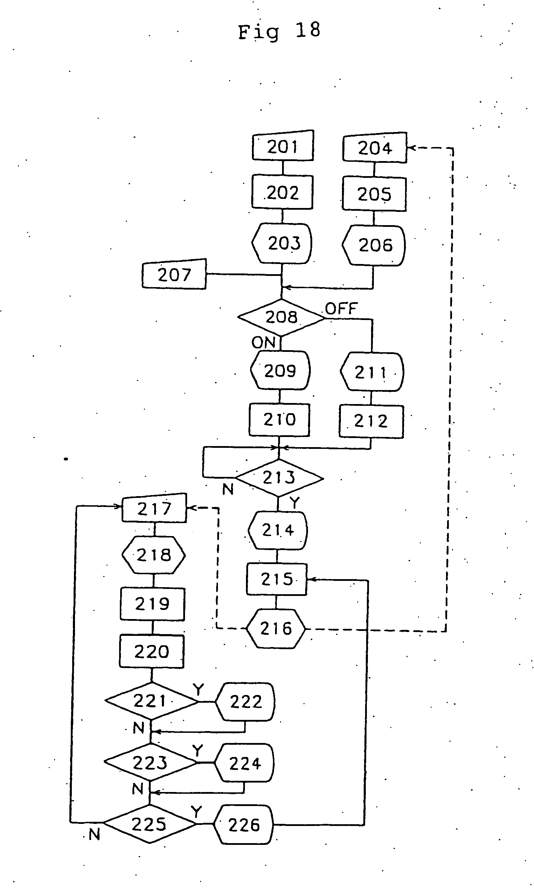

The operation of the water purifier 1 formed as mentioned above will now be described. A flow chart of a control operation for this water purifier is shown in Fig. 18.

Fig. 4 shows the condition of raw water discharged from the raw water shower port 14. When the faucet is opened, the raw water flows into the raw water inflow port 28, and the power of the flow of the raw water is lessened by the water flow moderating member 39, the raw water then passing through the water passage 21c opened with the cam portion 27c lifting the ball 11c, the raw water being discharged from the raw water spray port 14. At this time, the letters "Spray" marked on the indication ring 51 are seen from the opening 81.

When the lever 5 shown in Fig. 1 is then turned until the lever contacts the operation stopper 43, the driving shaft 41 connected to the lever 5 turns 40° via the ratchet mechanism shown in Fig. 8. At the same time, this turning movement is transmitted from the spur gear 45 to the spur gear 46, and the valve shaft 12 is turned exactly 60°. Then, the cam portion 27b of the valve shaft 12 instead of the cam portion 27c thereof faces the upward direction, and the water passage 21c is closed to cause the water passage 21b to be opened. As a result, the raw water passes through the water passage 21c, and is discharged from the raw water stream port 15. At this time, the letters "Stream" marked on the indication ring 51 are seen from the opening 81.

When the finger is then removed from the lever 5, the lever is turned in the reverse direction owing to the torsion coil spring 44, and returns to its initial position and stops. During this time, the driving shaft 41 connected to the lever 41 via the ratchet mechanism is not turned, and none of the valve shaft 12 and indication ring 51 are turned.

When the lever 5 is pressed down once more, the valve shaft 12 is turned in the same manner exactly 60° to cause the water passage 21b to be closed and the water passage 21a to be opened. As a result, the raw water passes through the water passage 21a and flows to the raw water supply port 26. The raw water then flows through the raw water receiving port 62 shown in Fig. 7, into the filter cartridge 3, and is filtered through an adsorbent, such as activated carbon, and hollow fibers. The filtered water flows from the purified water supply port 63 to the purified water receiving port 29, and is discharged (refer to Fig. 10) from the purified water discharge port 19 through the purified water passage 30. At this time, the letters "Purified Water" marked on the indication ring 51 are seen from the opening 81, and the water wheel 122 is rotated by the purified water flowing in the purified water passage 30, a pulse signal being sent by the flow rate detecting member 102 to the control member 104, the cycle of the pulse signal being integrated as a flow rate of the purified water.

In accordance with the integrated flow rate of this purified water, the residual lifetime of the filter cartridge is shown on the filter cartridge replacement indication element 161 in the liquid crystal display 105. Namely, when the use of the filter cartridge is started, all of the frame 167 and blocks A, B, C of the filter cartridge replacement indication element 161 are turned on as shown in Fig. 17. When an integrated number of pulse count corresponding to the integrated flow rate of the purified water reaches a first preset level, the block A 164 is turned off. When this integrated number of pulse count reaches a second preset level, the block B 165 is turned off. When this integrated number of pulse count comes close to an integrated flow rate at which the filter cartridge has to be replaced (third preset level), the block C 166 is turned off with the frame 167 flashing to urge the user to replace the filter cartridge. When the user replaces the filter cartridge with a new filter cartridge, and presses the reset button 154, the integrated number is reset to zero, and the filter cartridge replacement indication element 161 is also reset to the initial indication.

The water purifier according to the present invention is preferably so formed that the battery replacement indication element 162 in the liquid crystal display 105 is flashed at a suitable time to urge the user to replace the battery. Therefore, it is not necessary for the user to take the trouble to memorize the time when use of the battery was started and the lifetime of the battery referred to in an operating manual or the like. According to the invention, the user does not encounter a failure to replace the battery due to a lapse of memory of the lifetime of the battery, and does not encounter an extinction of data of the integrated flow rate during use of the filter cartridge, and can carry out the replacement of the battery at a proper time. When the user replaces the battery with a new battery, the battery replacement indication element 162 is automatically turned off. Since the consumption power of the battery is substantially constant irrespective of the quantity of water in the water purifier, the present invention is preferably so composed that the time at which an OFF-state of the battery replacement indication element changes into an ON-state is determined on the basis of an integrated value of the purified water supply time. The battery replacement indication element can be flashed at a point in time at which the voltage of the battery lowers to a level of or below a preset level. The time at which an OFF-state of the battery replacement indication element changes into an ON-state can also be determined on the basis of an integrated flow rate of the purified water, integrated value of the time during which the purified water is not supplied, and the like.

The liquid crystal display 105 further shows the kind of filter cartridge set in the water purifier by the kind-of-cartridge indication element 163 turning on and off on the basis of a signal from the cartridge distinguishing member 103 mentioned above. For example, when a filter cartridge (which will be hereinafter referred to as a high rejection cartridge) provided with a projection on a bottom portion thereof and having a high organism rejection is set in the water purifier, the kind-of-cartridge indication element is turned on. When a standard filter cartridge, which is not provided with a projection on a bottom portion thereof, is set therein, the kind-of-cartridge indication element is turned off. When the lifetime of the cartridges is also different, the first to third preset values concerning the filter cartridge replacement indication mentioned above are stored for the high rejection cartridge and standard cartridge respectively, and these set values are automatically selected on the basis of a signal from the filter cartridge distinguishing member 103. Since the residual lifetime of each kind of filter cartridge is thus indicated, the user can replace the filter cartridge at a proper time even when the user does not take the trouble to memorize the kind of filter cartridge in use, filtering capacity thereof and time at which the cartridge started being used.

This liquid crystal display 105 is turned off when the filter cartridge 3 is not used. Namely, the CPU on the circuit board 151 detects the stoppage of the supplying of purified water and the stoppage of the outputting of a pulse signal from the flow rate detecting member 102 (the continuation of the opening and closing of the magnetic switch 124, which is not shorter than a predetermined period of time) to switch the operational mode to a sleep mode and turn off the liquid crystal display 105. Owing to this switching operation, the power consumption of the battery can be held down greatly, so that the battery can be used for a long period of time. Immediately after the replacement of the battery and immediately after the reset button pressing operation, the sleep mode is cancelled for only a predetermined period of time, and the liquid crystal display 105 is turned on. The purpose of this operation is to make sure that the user can set the battery correctly and reset data correctly.

The present invention can be practiced in a modified manner as follows.
(1) Although the filter cartridge replacement indication element 161 in the above-described mode of embodiment has a system for turning off the blocks in a stepped manner, a system for turning on the blocks in a stepped manner may also be employed. Any of a system for displaying an integrated flow rate as well as a subtraction type system and an addition type system may be employed.
(2) In the above-described mode of embodiment, the liquid crystal display 105 is used as an indicator. When a dial tone or voice are generated simultaneously by providing a buzzer and a speaker, the user comes to more easily notice further what is indicated by the indicator.
(3) Though the kind of the filter cartridge is distinguished from others by the filter cartridge distinguishing member 103 in the above-described mode of embodiment, an input button for manually inputting the kind of filter cartridge may be provided. Moreover, when a device for inputting the name of the kind of cartridge by continuously pressing a reset button for a period of time not shorter than a predetermined period of time is provided, i.e., when a device serving as both an input button and a reset button is provided, the manufacturing cost can be held down.
(4) The above-described mode of embodiment has a structure for fixing the battery cover 112 to the battery holder 115 by a bayonet mechanism. Either a screw-combining mechanism or a sliding mechanism may also be employed.
(5) In the above-described mode of embodiment, a flow rate of the water is detected by using the magnetic switch 124. A method using reduction gears and electric contacts, and a method using a member deformed by the supplied water, such as a diaphragm, and electric contacts may also be employed.
(6) In the above-described mode of embodiment, a ratchet mechanism is used, and a switching operation is carried out by vertically moving the lever 5. A system in which the switching condition changes in accordance with a position in which a lever stops may also be used.
(7) In the above-described mode of embodiment, a selector valve using balls as valve plugs is employed. A selector valve adapted to open and close a flow passage by a driving shaft provided with a rubber packing or an O-ring fitted fixedly therearound may also be employed.
(8) The above-described mode of embodiment is a water purifier supported fixedly on a faucet. The water purifier can also be used practically as a stationary water purifier in which the filter cartridge is placed in the vicinity of a sink, an under-sink type water purifier the filter cartridge of which is placed under a sink, and a pitcher type water purifier not joined to a faucet. Additionally, this water purifier can also be used practically as an alkaline ionized water maker or a mineral water generator.

### Industrial Applicability:

The water purifier according to the present invention has a filter cartridge provided with a filter, and a water purifier body in which the filter cartridge is loaded. The water purifier body can be loaded with a plurality of kinds of filter cartridges, and provided with a indicating member for indicating the kind of the filter cartridge in use. Therefore, the user can easily ascertain the kind of the water-purifying cartridge in use.

When the filter cartridge replacement time is indicated by the indicating member, it can be known that the filter cartridge is reaching the end of its lifetime and needs to be replaced, so that the filter cartridge can be replaced at a proper time. When the power source replacement time is indicated, it is possible to prevent the power source from reaching the end of its lifetime, and the data on the integrated flow rate of the water and the kinds of the filter cartridges from being lost. When liquid crystal displays are used as the indicator, various kinds of information can be shown visually with letters and illustrations, so that the user can note very easily what is indicated by the indicators.

In the water purifier according to the present invention, preferably, the filter cartridge is provided with a mark indicating the kind of the cartridge, and the water purifier body is provided with a distinguishing member for the mark. Therefore, the kind of the filter cartridge can be automatically distinguished from that of another and is indicated by the indicator. This enables the user to note the kind of the cartridge even when the user does not make sure of the indication of the kind of the cartridge printed on an outer surface thereof. When the mark is provided as a part of the outer surface of the filter cartridge, the provision of the mark does not cause the filter cartridge manufacturing cost to greatly increase.

The water purifier according to the present invention is preferably provided with an operating member for manually resetting the content of what is indicated by the indicator to an initial state so that the content of what is indicated by the indicator is not automatically reset. Therefore, even when the cartridge is taken out from the water purifier so as to make sure of the kind of cartridge is in use, automatic resetting of the integrated flow rate used does not occur, so that a problem of a failure to properly indicate the cartridge replacement time is not encountered in the invention.

According to the invention, preferably the operating member is provided on the outer surface of the water purifier, and waterproofed. Therefore, the entry of the water into the operating member can be reliably prevented, and an erroneous operation of the circuit board, which is ascribed to the entry of the water thereinto, does-not occur.

The water purifier according to the invention is preferably a directly-faucet-connected type water purifier, which has smaller dimensions as compared with a stationary water purifier in which a filter cartridge is set in the vicinity of a sink, and does not constitute a hindrance to the surroundings.

## Claims

1. A water purifier (1) having a filter cartridge (3) provided with a filter and a water purifier body (2) to which the filter cartridge is loaded, which water purifier (1) is selectively operable to discharge raw water or water purified by the filter cartridge (3) and has a water flow rate detecting member (102) for detecting flow of purified water from the filter cartridge (3), wherein the water purifier (1) is capable of being loaded with a plurality of kinds of filter cartridges and is provided with an indicator (105) adapted to indicate the kind of the filter cartridge in use in the water purifier (1) and **characterised in that** means are provided to turn off the indicator (105) when the flow rate detecting member (102) detects that flow of purified water from the filter cartridge (3) has stopped.

2. A water purifier according to Claim 1, which is provided with a power source (111) for use in indicating the kind of the filter cartridge (3), and an indicator for indicating the power source replacement time (162).

3. A water purifier according to Claim 1, which is provided with an indicator (161) for indicating the filter cartridge (3) replacement time.

4. A water purifier according to any one of Claims 1 to 3, wherein the filter cartridge (3) is provided with a mark (72) for distinguishing the kind of cartridge, and the water purifier (1) is provided with a member (103) for distinguishing the mark to distinguish the kind of filter cartridge in the water purifier.

5. A water purifier according to Claim 4, wherein the mark is a projection and/or a recess formed on and/or in an outer surface of the filter cartridge.

6. A water purifier according to any one of Claims 1 to 5, wherein the indicator is a liquid crystal display.

7. A water purifier according to any one of Claims 1 to 6, wherein the water purifier is provided with an operating member (154) for resetting what is indicated by the indicators to an initial condition.

8. A water purifier according to Claim 7, wherein the operating member is provided on an outer surface of the water purifier and waterproofed.

9. A water purifier according to any one of the preceding claims, wherein the water flow detecting member (102) includes a water wheel (122) located on the downstream or the upstream side of the filter cartridge (3).

10. A water purifier according to any one of the preceding claims, wherein the water purifier is provided with a raw water inflow port (26) to be joined to a faucet, a filter cartridge (3) for purifying raw water, and a purified water outflow port (19), and is of a directly-faucet-connected type to be supported fixedly on the faucet.

## Patentansprüche

1. Wasserreinigungsvorrichtung (1) mit einer Filterkartusche (3), die mit einem Filter und einem Wasserreinigungskörper (2) bereitgestellt ist, in den die Filterkartusche geladen wird, wobei die Wasserreinigungsvorrichtung (1) wahlweise betätigbar ist, um Rohwasser oder durch die Filterkartusche (3) gereinigtes Wasser abzugeben, und ein Detektionselement (102) für die Wasserdurchflussrate zur Detektion des Durchflusses von gereinigtem Wasser aus der Filterkartusche (3) aufweist, wobei die Wasserreinigungsvorrichtung (1) mit einer Vielzahl verschiedener Filterkartuschen beladbar ist und mit einem Indikator (105) bereitgestellt ist, der geeignet ist, um die Art der in der Wasserreinigungsvorrichtung (1) verwendeten Filterkartusche anzuzeigen, und **dadurch gekennzeichnet ist, dass** Mittel bereitgestellt sind, um den Indikator (105) auszuschalten, wenn das Durchflussratendetektionsmittel (102) detektiert, dass der Durchfluss von gereinigtem Wasser aus der Filterkartusche (3) beendet wurde.

2. Wasserreinigungsvorrichtung nach Anspruch 1, die mit einer Stromquelle (111) zur Verwendung zum Anzeigen der Art der Filterkartusche (3) und einem Indikator zum Anzeigen des Zeitpunkts (162), zu dem die Stromquelle ausgetauscht werden muss, bereitgestellt ist.

3. Wasserreinigungsvorrichtung nach Anspruch 1, die mit einem Indikator (161) zum Anzeigen des Zeitpunkts, zu dem die Filterkartusche (3) ausgetauscht werden muss, bereitgestellt ist.

4. Wasserreinigungsvorrichtung nach einem der Ansprüche 1 bis 3, wobei die Filterkartusche (3) mit einer Markierung (72) zur Unterscheidung der Filterkartuschenarten bereitgestellt ist und die Wasserreinigungsvorrichtung (1) mit einem Element (103) zur Unterscheidung der Markierung zur Unterscheidung der Filterkartuschenarten bereitgestellt ist.

5. Wasserreinigungsvorrichtung nach Anspruch 4, wobei die Markierung ein Vorsprung und/oder eine Vertiefung ist, der/die auf und/oder in der Außenoberfläche der Filterkartusche ausgebildet ist.

6. Wasserreinigungsvorrichtung nach einem der Ansprüche 1 bis 5, wobei der Indikator eine Flüssigkristallanzeige ist.

7. Wasserreinigungsvorrichtung nach einem der Ansprüche 1 bis 6, wobei die Wasserreinigungsvorrichtung mit einem Betätigungselement (154) zum Rückstellen der durch die Indikatoren angezeigten Information auf einen Ausgangszustand bereitgestellt ist.

8. Wasserreinigungsvorrichtung nach Anspruch 7, wobei das Betätigungselement auf einer Außenoberfläche der Wasserreinigungsvorrichtung bereitgestellt und wasserdicht ist.

9. Wasserreinigungsvorrichtung nach einem der vorangegangenen Ansprüche, wobei das Element zur Detektion des Wasserdurchflusses (102) ein Wasserrad (122) umfasst, das an der stromauf- oder stromabwärts gelegenen Seite der Filterkartusche (3) angeordnet ist.

10. Wasserreinigungsvorrichtung nach einem der vorangegangenen Ansprüche, wobei die Wasserreinigungsvorrichtung mit einer Rohwassereinströmöffnung (26), die an einen Wasserhahn anzuschließen ist, einer Filterkartusche (3) zur Reinigung des Rohwassers und einer Ausströmöffnung für das gereinigte Wasser (19) bereitgestellt ist und vom direkt mit dem Wasserhahn verbundenen Typ ist, um fix an dem Hahn angebracht zu werden.

## Revendications

1. Purificateur d'eau (1) ayant une cartouche filtrante (3) munie d'un filtre et un corps de purification d'eau (2) dans lequel la cartouche filtrante est introduite, ledit purificateur d'eau (1) peut être amené à fonctionner sélectivement pour évacuer l'eau brute ou l'eau purifiée par la cartouche filtrante (3) et possède un élément de détection de débit d'écoulement d'eau (102) pour détecter l'écoulement de l'eau purifiée de la cartouche filtrante (3), où le purificateur d'eau (1) peut être chargé en une pluralité de types de cartouches filtrantes et présente un indicateur (105) apte à indiquer le type de cartouche filtrante en utilisation dans le purificateur d'eau (1), et **caractérisé en ce que** des moyens sont prévus pour mettre en service l'indicateur (105) lorsque l'élément de détection de débit d'écoulement (102) détecte que l'écoulement de l'eau purifiée de la cartouche filtrante (3) s'est arrêtée.

2. Purificateur d'eau selon la revendication 1, qui est muni d'une source de puissance (11) destinée à être utilisée pour indiquer le type de cartouche filtrante (3), et d'un indicateur pour indiquer le temps de remplacement (162) de la source de puissance.

3. Purificateur d'eau selon la revendication 1, qui est muni d'un indicateur (161) pour indiquer le temps de remplacement de la cartouche filtrante (3).

4. Purificateur d'eau selon l'une quelconque des revendications 1 à 3, dans lequel la cartouche filtrante (3) présente une marque (72) pour distinguer le type de cartouche, et le purificateur d'eau (1) est muni d'un élément (103) pour distinguer la marque afin de distinguer le type de cartouche filtrante dans le purificateur d'eau.

5. Purificateur d'eau selon la revendication 4, dans lequel la marque est une saillie et/ou un évidement formé sur et/ou dans une surface externe de la cartouche filtrante.

6. Purificateur d'eau selon l'une quelconque des revendications 1 à 5, dans lequel l'indicateur est un affichage à cristaux liquides.

7. Purificateur d'eau selon l'une quelconque des revendications 1 à 6, dans lequel le purificateur d'eau est muni d'un élément fonctionnel (154) pour remettre ce qui est indiqué par les indicateurs à un état initial.

8. Purificateur d'eau selon la revendication 7, dans lequel l'élément fonctionnel est réalisé sur une surface externe du purificateur d'eau et est rendu étanche à l'eau.

9. Purificateur d'eau selon l'une quelconque des revendications précédentes, dans lequel l'élément de détection d'écoulement d'eau (102) comporte une roue à eau (122) située au côté aval ou amont de la cartouche filtrante (3).

10. Purificateur d'eau selon l'une quelconque des revendications précédentes, dans lequel le purificateur d'eau est muni d'un orifice d'afflux d'eau brut (26) à relier à un robinet, une cartouche filtrante (3) pour purifier l'eau brute et un orifice d'écoulement d'eau purifiée (19) et est d'un type relié directement au robinet destiné à être supporté fixement sur le robinet.
